# EUROPÄISCHE PATENTSCHRIFT

(11) **EP 0 664 082 B1**
(45) Veröffentlichungstag und Bekanntmachung des Hinweises auf die Patenterteilung: **02.06.1999**
(21) Anmeldenummer: 94114245.7
(22) Anmeldetag: 09.09.1994
(51) Int. Cl.: A21B 3/15, B32B 7/02

(54) **Blattförmige Backunterlage**
Baking sheet
Feuille de cuisson

(30) Priorität: 19.01.1994 DE 9400814 U
(43) Veröffentlichungstag der Anmeldung: 26.07.1995
(73) Patentinhaber: Cofresco Frischhalteprodukte GmbH & Co. KG, 32427 Minden (DE)
(72) Erfinder: Arning, Hans-Jürgen, Dr., D-32312 Lübbecke (DE); Simon, Werner, Dr., D-32427 Minden (DE); Völker, H.-Georg, D-32427 Minden (DE); Zimmermann, H.-Joachim, Dr., D-32429 Minden (DE)
(74) Vertreter: Loesenbeck, Karl-Otto, Dipl.-Ing.

(56) Entgegenhaltungen:
- EP-A- 0 445 509
- EP-A- 0 502 286
- DE-A- 3 835 796

## Beschreibung

Die vorliegende Erfindung betrifft eine blattförmige Backunterlage aus einem Material mit Antihafteigenschaften oder aus einem Trägermaterial mit einer Antihaftbeschichtung.

Backunterlagen der vorerwähnten Art sind an sich bekannt und werden im allgemeinen Sprachgebrauch auch als "Backpapier" bezeichnet.

Die bislang bekannten Backunterlagen weisen ausschließlich Antihafteigenschaften auf und werden dazu benutzt, das Anhaften von Backwaren zu verhindern.

Der vorliegenden Erfindung liegt die Aufgabe zugrunde, eine Backunterlage der gattungsgemäßen Art zu schaffen, die weitere Verwendungsmöglichkeiten im Haushalt eröffnet.

Diese Aufgabe wird erfindungsgemäß dadurch gelöst, daß eine Seite der Backunterlage mit einem saugfähigen Material beschichtet ist.

Eine derart gestaltete Backunterlage kann wahlweise in herkömmlicher Art oder auch dazu benutzt werden, bei der Zubereitung von beispielsweise Fett oder Feuchtigkeit abgehenden Speisen das Fett oder die Feuchtigkeit aufzunehmen und somit die Verunreinigung eines Backbleches, eines Rostes oder dgl. zu verhindern.

Ein weiterer Vorteil besteht darin, daß eine erfindungsgemäße Backunterlage auch mehrfach benutzt werden kann.

Weitere Merkmale der Erfindung sind Gegenstand von Unteransprüchen.

Anhand der beigefügten Zeichnung werden Ausführungsbeispiele der Erfindung im vorliegenden näher beschrieben.

Im einzelnen zeigen:
- Fig. 1: eine perspektivische Darstellung einer blattförmigen Backunterlage,
- Fig. 2: einen stark vergrößert dargestellten Schnitt durch die Backunterlage gemäß Fig. 1,
- Fig. 3: einen ebenfalls stark vergrößert dargestellten Schnitt durch eine Backunterlage nach einem weiteren Ausführungsbeispiel der Erfindung.

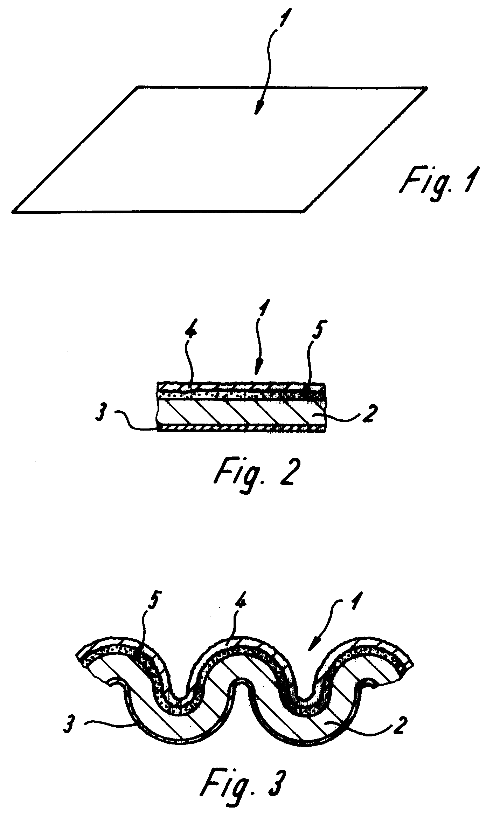

In Fig. 1 ist beispielhaft eine blattförmige Backunterlage 1 von rechteckigem Grundriß dargestellt.

Eine derartige Backunterlage kann selbstverständlich auch einen runden oder einen anderen geometrischen Grundriß aufweisen.

Fig. 2, die einen stark vergrößerten Schnitt der Backunterlage 1 zeigt, macht deutlich, daß die Backunterlage 1 aus einem Verbundmaterial besteht.

Zum einen ist eine Trägerschicht 2 vorhanden, die einseitig mit einer Antihaftbeschichtung 3 versehen ist. Eine derartige Antihaftbeschichtung 3 ist bislang auch schon bei Backunterlagen verwendet worden und kann beispielsweise aus organischen Polymeren, wie Polymethylsiloxanen, fluorhaltigen Verbindungen wie Polytetrafluorethylen oder anorganischen Verbindungen wie Chromstearat, Wasserglas oder anderen Silikaten bestehen.

Wie Fig. 2 weiterhin deutlich macht, ist die Trägerschicht 2 auf der der Antihaftbeschichtung 3 gegenüberliegenden Seite mit einer Beschichtung 4 aus einem saugfähigen Material versehen. Zwischen der Trägerschicht 2 und der Beschichtung 4 ist ein Haftvermittler 5 gezeigt, der für einen festen Verbund zwischen der Trägerschicht 2 einerseits und der Beschichtung 4 aus saugfähigem Matereial andererseits sorgt.

Die Beschichtung 4 aus saugfähigem Material kann z.B. ein saugfähiges Papier, ein Vlies aus Zellulose, Baumwolle, Faser oder dgl. synthetischen Fasern und ihren Mischformen sein.

Sowohl die Trägerschicht 2 wie auch die Antihaftbeschichtung 3 und die Reschichtung 4 aus saugfähigem Material sollen bis 220°C temperaturbeständig sein. Entsprechende Materialien sind dem Fachmann bekannt.

Abweichend von dem in Fig. 2 dargestellten Ausführungsbeispiel kann die Backunterlage 1 auch aus einem Material mit Antihafteigenschaften bestehen, welches einseitig mit einer Beschichtung 4 aus saugfähigem Material versehen ist.

Fig. 3 zeigt einen Schnitt durch eine Backunterlage, deren prinzipieller Aufbau dem oben erwähnten Ausführungsbeispiel entspricht.

Im übrigen macht Fig. 3 deutlich, daß die Backunterlage 1 insgesamt eine Kreppstruktur aufweist. Hierdurch wird bei gleichbleibender Grundrißfläche eine nicht unbeträchtliche Vergrößerung der Oberfläche erzielt, so daß insbesondere bei Benutzung der saugfähigen Oberfläche größere Öl-, Fett- oder Flüssigkeitsmengen aufgenommen werden können.

Es ist auch denkbar, eine Backunterlage 1 ausschließlich auf der saugfähigen Seite mit einer Kreppstruktur, mit einzelnen Nocken oder anderen, die wirksame Oberfläche vergrößernden Strukturen auszustatten.

Es ist besonders vorteilhaft, als Haftvermittler 5 einen Kleber auf Stärke-Basis zu verwenden, da hierdurch die Möglichkeit eröffnet wird, die beiden Komponenten der Backunterlage 1 nach dem Gebrauch leicht voneinander trennen zu können. Eine getrennte Entsorgung der beiden Komponenten ist somit möglich. Die Trennbarkeit ergibt sich daraus, daß Stärke-Kleber bei den bei der Benutzung der Backunteralgen 1 herrschenden Temperaturen ihre Haftkraft weitestgehend verlieren.

## Patentansprüche

1. Blattförmige Backunterlage aus einem Material mit Antihafteigenschaften oder aus einem Trägermaterial mit einer Antihaftbeschichtung, **dadurch gekennzeichnet,** daß eine Seite der Backunterlage (1) mit einem saugfähigen Material (4) beschichtet ist.

2. Backunterlage nach Anspruch 1, dadurch gekennzeichnet, daß das saugfähige Material aus Papier oder aus einem Cellulose-, Baumwoll-, Polymer- oder Faservlies organischer oder anorganischer Herkunft besteht.

3. Backunterlage nach Anspruch 1 oder 2, dadurch gekennzeichnet, daß das saugfähige Material (4) über einen Haftvermittler (5) mit der Backunterlage im übrigen verbunden ist.

4. Backunterlage nach einem oder mehreren der vorhergehenden Ansprüche, dadurch gekennzeichnet, daß zumindest das saugfähige Material (4) eine Kreppstruktur oder eine andere, die nutzbare Oberfläche vergrößernde Struktur aufweist.

5. Backunterlage nach Anspruch 3, dadurch gekennzeichnet, daß der Haftvermittler (5) ein Stärke-Kleber ist.

## Claims

1. Baking underlay in sheet form, made from a material with non-stick properties or from a support material with a non-stick coating, characterised in that one side of the baking underlay (1) is coated with an absorbent material (4).

2. Baking underlay according to claim 1, characterised in that the absorbent material is made from paper or from a cellulose, cotton, polymer or fibrous fabric of organic or inorganic origin.

3. Baking underlay according to claim 1 or 2, characterised in that the absorbent material (4) is additionally bonded by means of a bonding agent (5) to the baking underlay.

4. Baking underlay according to one or more of the preceding claims, characterised in that at least the absorbent material (4) has a crepe structure or another structure increasing the useable surface.

5. Baking underlay according to claim 3, characterised in that the bonding agent (5) is a starch glue.

## Revendications

1. Support de cuisson en forme de feuille constitué d'un matériau présentant des propriétés anti-adhésion ou bien d'un matériau support doté d'une enduction anti-adhésion, caractérisé en ce qu'une face du support de cuisson (1) est revêtu d'un matériau (6) absorbant.

2. Support de cuisson selon la revendication 1,
caractérisé en ce que
le matériau absorbant est en papier ou en un matelas de cellulose, de coton de polymère ou de fibres d'origine organique ou non-organique.

3. Support de cuisson selon la revendication 1 ou 2,
caractérisé en ce que
le matériau (4) absorbant est pour le reste relié au support de cuisson par l'intermédiaire d'un agent d'adhésion (5).

4. Support de cuisson selon l'une ou plusieurs des revendications précédentes,
caractérisé en ce qu'
au moins le matériau (4) absorbant présente une structure en crêpe ou bien une autre structure, augmentant la surface utilisable.

5. Support de cuisson selon la revendication 3,
caractérisé en ce que
l'agent d'adhésion (3) est un adhésif à base d'amidon.
